# EUROPÄISCHE PATENTSCHRIFT

(11) **EP 1 097 325 B1**
(45) Veröffentlichungstag und Bekanntmachung des Hinweises auf die Patenterteilung: **04.02.2004**
(21) Anmeldenummer: 99945900.1
(22) Anmeldetag: 02.07.1999
(51) Int. Cl.: F16J 15/36, F16J 15/16, F16J 15/44

(54) **DICHTUNGSANORDNUNG, INSBESONDERE FÜR EINE ROTATIONSMASCHINE**
SEALING SYSTEM, ESPECIALLY FOR A ROTARY MACHINE
DISPOSITIF D'ETANCHEITE, EN PARTICULIER POUR UNE MACHINE ROTATIVE

(30) Priorität: 15.07.1998 DE 19831815
(43) Veröffentlichungstag der Anmeldung: 09.05.2001
(73) Patentinhaber: SIEMENS AKTIENGESELLSCHAFT, 80333 München (DE)
(72) Erfinder: HAJE, Detlef, D-46236 Bottrop (DE)
(86) Internationale Anmeldenummer: PCT/DE1999/002059
(87) Internationale Veröffentlichungsnummer: WO 2000/004309

(56) Entgegenhaltungen:
- DE-C- 19 521 229
- FR-A- 2 646 221
- US-A- 3 907 309
- US-A- 4 802 679
- US-A- 5 743 707

## Beschreibung

Die Erfindung betrifft eine Dichtungsanordnung zur Abdichtung eines ersten Bereichs von einem zweiten Bereich, welche Bereiche jeweils mit einem Fluid durchströmbar und auf einem unterschiedlichen Druck haltbar sind. Durch die unterschiedlichen Drücke ist ein Differenzdruck zwischen den beiden Bereichen erzeugbar. Die Erfindung betrifft insbesondere eine Dichtungsanordnung, wie sie zur Abdichtung in Rotationsmaschinen, wie elektrischen Rotationsmaschinen und thermischen Strömungsmaschinen, einsetzbar ist.

In der EP 0 611 905 A1 ist eine Vorrichtung zum berührungsfreien Abdichten zwischen Räumen unterschiedlichen Drucks, insbesondere für eine Strömungsmaschine, bei der Wellendurchtritte zwischen Räumen unterschiedlichen Drucks mit geeigneten Dichtungen versehen werden müssen, beschrieben. Die angegebene Vorrichtung besteht aus einer Labyrinthdichtung, bei der stufenförmige Labyrinthspalte zwischen einem rotierenden und einem feststehenden Teil gebildet sind. In den Labyrinthspalten sind jeweils an dem rotierenden und dem feststehenden Teil Dichtungsspitzen angeordnet, wodurch ein hoher Grad der Verwirbelung eines durchströmenden Mediums erreicht werden soll. Die Dichtungsspitzen zwischen feststehendem und rotierendem Teil sind möglichst nahe aneinander angeordnet, so daß nur ein geringer radialer Spalt vorhanden ist. Die Dichtungsspitzen erstrecken sich radial so, daß sich Dichtungsspitzen zweier benachbarter Stufen überlappen. Eine Gruppe von Dichtungsspitzen kann mit Hilfe eines Stemmdrahtes in eine entsprechende Nut eingestemmt sein.

In dem Artikel "Maßnahmen zur Modernisierung und Lebensdauerverlängerung an Dampfturbinenkomponenten" von D. Bergmann, M. Jansen und H. Oeynhausen, in VGB Kraftwerkstechnik 71, 1991, Heft 2, Seiten 116 bis 122, sind verschiedene Dichtungen für eine Turbinenstufe einer Dampfturbine angegeben. Das Bild 13 des Artikels zeigt die relativen Leckdampfströme zwischen einer Leitschaufel und einem Turbinenläufer. Hierbei sind in einigen Ausführungsformen Vertiefungen in der Leitschaufel eingebracht. Die geringsten relativen Leckdampfstromraten werden für Labyrinth-Dichtungen erzielt, bei denen in axialer Richtung alternierend Dichtspitzen an dem Turbinenläufer und an den Leitschaufeln angeordnet sind. Durch eine Verbesserung der Spaltabdichtung zwischen Turbinenläufer und Leitschaufel lassen sich die Wirkungsgradverluste einer Dampfturbinenanlage verringern.

Die AT-PS 362 639 zeigt eine berührungslose Dichtung zwischen einem in einem abzudichtenden Raum rotierenden Teil und einem feststehenden Teil. Ein ringförmiger Dichtkörper umgibt eine aus einem Gehäuse herausführende Welle. In dem Gehäuse ist ein Druckmedium unter einem Druck T1 gespeichert. Der Dichtkörper wird durch den Druck des Druckmediums in Richtung auf eine Dichtfläche der Welle gedrückt. Durch Druckkammern verbleibt ein Spalt zwischen der Dichtfläche und dem Dichtkörper. Die Höhe des Spaltes ist fest durch Drosselstellen vorgegeben, die den Druck T1 auf einen niedrigeren Druck in den Druckkammern reduzieren. Ein Stirnwandabschnitt des Dichtkörpers, der der Dichtfläche gegenüberliegt, ist so positioniert, daß durch eine Kipp-Punkt-Verlagerung eine eventuelle Verkippung des Dichtkörpers automatisch ausgeglichen wird.

Die DE 35 33 829 A1 zeigt eine Dichtungsvorrichtung mit einer gasgeschmierten Gleitringdichtung. Zwei einander gegenüberliegende Dichtringe bilden einen Dichtspalt, der durch ein gasförmiges Medium durchströmt wird. Bei einem ganz bestimmten Druck ergibt sich ein Gasschmierfilm, durch den die beiden Dichtringe in einer definierten Spaltbreite voneinander beabstandet gehalten werden. Bei einer Druckverringerung wird einer der Dichtringe durch eine Federkraft in eine Öffnungsstellung zurückgedrückt.

Aufgabe der Erfindung ist es, eine Dichtungsanordnung zur Abdichtung zweier von einem Fluid durchströmbaren Bereiche mit unterschiedlichem Druckniveau anzugeben, um einen Leckstrom von einem in den anderen Bereich hinein zu reduzieren, wie es beispielsweise in thermischen Strömungsmaschinen oder elektrischen Rotationsmaschinen erforderlich sein kann.

Erfindungsgemäß wird die Aufgabe durch eine Dichtungsanordnung zur Abdichtung eines ersten Bereiches von einem zweiten Bereich, welche Bereiche jeweils mit einem Fluid durchströmbar und/oder befüllbar und auf einem unterschiedlichen Druck haltbar sind, so daß ein Differenzdruck gebildet ist, gelöst, indem die Dichtungsanordnung einen Verformungsbereich und eine damit verbundene Dichtfläche aufweist, welche Dichtfläche durch einen Dichtspalt von einer Gegenfläche beabstandet ist, wobei die Höhe des Dichtspaltes durch eine Verformung des Verformungsbereichs infolge einer durch den Differenzdruck ausgeübten Kraft einstellbar ist, wobei an der Dichtfläche und/oder an der Gegenfläche zumindest ein in den Dichtspalt oder die Dichtfläche bzw. die Gegenfläche hineinragendes Dichtelement vorgesehen ist, wobei die Dichtungsanordnung zwei Dichtelemente aufweist, die in der Differenzdruck-induzierten Strömungsrichtung (Spalthauptrichtung) voneinander beabstandet sind, wobei das eine Dichtelement eine Reduzierung der Spalthöhe auf eine erste Höhe und das andere Dichtelement auf eine zweite von der ersten Höhe verschiedene Höhe bewirkt.

Die Erfindung geht hierbei von der Überlegung aus, daß bei druckführenden Maschinen, wie Strömungsmaschinen, insbesondere Dampfturbinen, unterschiedliche Druckniveaus des Arbeitsmediums, beispielsweise Dampfes oder Gas, gegeneinander abzudichten, oder das Arbeitsmedium gegenüber einem Umgebungsmedium abzudichten ist. Bei bekannten Dichtungen zwischen stehenden und rotierenden Teilen werden überwiegend berührungslose Dichtungen eingesetzt, insbesondere bei Dampfturbinen wegen der hohen Umfangsgeschwindigkeiten und der Art der Dichtungsaufgabe. Diese berührungslosen Dichtungen weisen bei Vorhandensein von Druckdifferenzen einen unvermeidlichen Leckmassenstrom auf, welcher zu Verlusten in Leistung bzw. Wirkungsgrad der druckführenden Maschine führt. Der Leckmassenstrom ist wesentlich bestimmt durch die in der Dichtung bestehenden Spiele, z.B. Spitze-Spitze-Dichtungen oder Labyrinthdichtung, sowie durch Spaltbreiten bei Dichtungen ohne Spitzen. Diese Spiele sind bei bekannten Dichtungen so auszulegen, daß die in der Maschine auftretenden Belastungsfälle ohne Beschädigung, d.h. ohne ein Anstreifen, beherrschbar sind. Beispielsweise trifft dies bei normalem Betrieb, Kaltoder Warmstart, Durchfahren einer kritischen Drehzahl, Drehwerksbetrieb sowie Störfälle seitens der Anlage zu. Bei einem Anstreifen würde nämlich eine Überbrückung des Spiels mit einer Berührung der rotierenden mit der feststehenden Komponente erfolgen. Um dies in jeder Betriebs- oder Störfallsituation der Maschine zu vermeiden, sind die Spiele in aller Regel für den eigentlichen Betrieb, wenn also hohe hohe Dichtheitsanforderungen bestehen, zu groß bemessen. Für die Bemessung des Spiels sind vielmehr instationäre Vorgänge sowie das Durchfahren einer kritischen Drehzahl sowie der Ausgleich eventuell vorhandener Fertigungstoleranzen in Abmessung, Form und Lage maßgebend. Eine Verringerung des Spiels bei bekannten Dichtungen in einer Dampfturbine könnte zudem bei hohen Dampfdrücken und bei schlanken Turbinenläufern zu einer Spaltanregung führen, die ihrerseits das dynamische Verhalten der Maschine beeinflußt und u.U. zu selbsterregten Schwingungen führen kann. Darüber hinaus bewirken die bei den derzeitigen Dichtungen auftretenden Leckmasseströmen über die Dichtungen der Schaufelstufen bei einer Dampfturbine in Trommelbauweise beim Wiedereintritt in den Beschaufelungsraum Störungen in der Zuströmung der nachfolgenden Schaufelreihe, z.B. durch Fehlanströmungen.

Durch eine Differenzdruck-gesteuerte Dichtungsanordnung wird bei einer Veränderung des Differenzdrucks die Höhe des Dichtspalts verändert, so daß insbesondere bei zunehmendem Differenzdruck die Höhe des Dichtspalts, d.h. das Spiel, verringert und dadurch eine hohe Dichtwirkung erzeugt wird. Das Abdichten erfolgt hierbei durch ein Zusammenwirken der Dichtfläche mit der, insbesondere axialen, Gegenfläche. Eine hohe Dichtwirkung wird hierbei erreicht durch die Funktionsweise des Verformungsbereichs, welcher unter Anlegung des Differenzdrucks an die Dichtungsanordnung eine Verformung, insbesondere eine axiale Längung, zur Dichtfläche hin erfährt. Weiterhin ist durch die sich verändernde Beabstandung zwischen Dichtfläche und Gegenfläche ein Dichtungsbereich gebildet, durch den mit abnehmender Höhe des Dichtspaltes eine verbesserte Dichtwirkung erzeugt wird. Bei einer abnehmenden Höhe des Dichtspalts kann zudem eine zunehmende Gegenkraft, insbesondere Axialkraft, entgegen der Verformung (Längung) des Verformungsbereichs erzeugt werden. Hierdurch ist die Dichtungsanordnung nicht nur berührungsfrei, sondern auch selbsteinstellend.

Das Dichtelement ist vorzugsweise an einem äußeren Rand der Dichtfläche bzw. der Gegenfläche hin zu dem ersten Bereich oder hin zu dem zweiten Bereich angeordnet. Bevorzugt ist das Dichtelement an dem äußeren Rand hin zu dem Bereich mit dem geringeren Druckniveau angeordnet. Das Dichtelement kann hierbei z.B. als eine Spalte, ein Vorsprung oder eine Spitze ausgeführt sein. Als Dichtelement wird auch eine entsprechende Formgebung der Dichtungsfläche bzw. der Gegenfläche oder eine geometrische Gestaltung oder räumlich verteilte Materialzusammensetzung der Dichtfläche oder der Gegenfläche betrachtet, welche eine druckgesteuerte elastische Verformung mit einer dadurch hervorgerufenen Verringerung der Höhe des Dichtspalts bedingt. Durch das Anbringen eines geeigneten Dichtelements ist eine selbsteinstellende Dichtungsanordnung gegeben, bei der sich mit abnehmender Höhe des Dichtspaltes (Dichtspalthöhe) eine zunehmende, der Verformung des Verformungsbereichs entgegenwirkenden Gegenkraft, insbesondere einer Axialkraft, einstellt. Diese Gegenkraft wirkt einer weiteren Spaltverengung mit abnehmender Höhe des Dichtspaltes immer mehr entgegen. Dies resultiert u.a. daraus, daß bei einem verhältnismäßig großen Höhe des Dichtspalts sich bei einem Druckaufbau eine Strömung des Fluides zwischen den beiden Bereichen ergibt, welche durch den durch die Dichtfläche und die Gegenfläche gebildeten Spalt hindurchströmt. Die Strömungsgeschwindigkeit wird dabei umso größer, je größer die Höhe des Dichtspaltes und die Druckdifferenz sind. Bei einem überkritischen Druckverhältnis kann sich Schallgeschwindigkeit im engsten Querschnitt einstellen. Aufgrund physikalischer Gesetzmäßigkeiten, wie sie beispielsweise in der Bernoullischen Gleichung angegeben sind, stellt sich hierdurch ein abgesenkter statischer Druck im Spalt ein. Die Dichtfläche erfährt hierdurch eine Kraftwirkung (Schließkraft) in Richtung des Dichtspaltes, was zumindest zu einem teilweisen Schließen des Spaltes führt. Mit enger werdendem Dichtspalt nimmt die Strömungsgeschwindigkeit ab, und dadurch auch die auf die Dichtfläche wirkende Schließkraft zum Schließen des Spaltes.

Vorzugsweise ist ein Dichtelement in einem dem Bereich mit niedrigerem Druck zugewandten Randbereich angeordnet und das andere Dichtelement ist vorzugsweise in einem Randbereich an der Dichtfläche oder der Gegenfläche angeordnet, welcher dem Bereich mit höherem Druck zugewandt ist. Vorzugsweise führt das dem Bereich mit niedrigerem Druck zugewandte Dichtelement zu einer größeren Verengung des Dichtspaltes als das dem Bereich mit höherem Druck zugewandte Dichtelement. Die an der Dichtfläche oder Gegenfläche angeordneten Dichtelemente führen bei einer verringerten Höhe des Dichtspaltes zu einer Erhöhung des Druckes im Bereich des Dichtspaltes zwischen den beiden Dichtelementen. Dies bedingt gleichzeitig ein Sinken der Strömungsgeschwindigkeit im Dichtspalt insgesamt. Führt das dem Bereich mit niedrigem Druck zugewandte Dichtelement zu einer stärkeren Verengung des Dichtspaltes, so findet eine Annäherung des Druckes innerhalb des Dichtspaltes an den höheren Druck statt. Dies führt somit bei abnehmender Höhe des Dichtspaltes zu einer Zunahme der auf die Dichtfläche wirkenden Gegenkraft und gleichzeitig zu einem verringerten Verlustmassenstrom.

Die Dichtungsanordnung ist mithin hinsichtlich Konstruktion und Materialwahl in Bezug auf eine möglichst hohe Dichtwirkung bei einem vorgebbaren Druckdifferenzbereich einfach auslegbar. Insbesondere ist es möglich, daß bei diesem vorgebbaren Druckdifferenzbereich ein Gleichgewicht zwischen der aufgrund der Druckdifferenz auf die Dichtfläche wirkenden Schließkraft und dieser entgegenwirkenden durch die Spaltverengung hervorgerufenen Gegenkraft erreicht ist, bei dem sich eine günstige Spalthöhe einstellt. Hierdurch wird sich bei einer geringeren Druckdifferenz als der Auslegungsdruckdifferenz eine gegenüber dem Gleichgewichtszustand zwischen Schließkraft und Gegenkraft einstellenden Höhe des Dichtspalts ein etwas größerer Spalt einstellen. Bei Abwesenheit eines Differenzdrucks wird die Dichtungsanordnung unverformt bleiben. Hierdurch ist die maximale Höhe des Spaltes festgelegt, die je nach Anforderung und Auslegung für eine entsprechende Maschine, insbesondere bei einer Dampfturbine, mehrere Millimeter betragen kann. Die Dichtungsanordnung besitzt daher nur bei der Auslegungsdruckdifferenz, insbesondere bei Leistungsbetrieb einer Dampfturbine, wenn die erhöhten Dichtungsanforderungen bestehen, ein sehr enges Spiel und damit eine besonders gute Dichtwirkung. Während der bisher bei Dampfturbinen spielbestimmenden Vorgänge besitzt die Dichtungsanordnung ein großes Spiel, so daß ein Anstreifen der Dichtungsfläche an der Gegenfläche und damit eine Beschädigung der Maschine vermieden ist.

Die Dichtungsfläche kann so ausgeführt sein, daß sie gegenüber der Auslegungsdruckdifferenz steif oder nachgiebig (deformierbar) ist. Die Dichtungsfläche ist bevorzugt über einen Anbindungsbereich mit dem Verformungsbereich, insbesondere mit einem im Querschnitt U-förmigen Profil, steif oder nachgiebig verbunden. Eine Anbindung der Dichtungsfläche an den Verformungsbereich kann an dem Bereich mit niedrigerem Druck oder dem Bereich mit höherem Druck erfolgen. Bei einer kreisringförmigen Ausgestaltung der Dichtfläche entspricht dies einer Anbindung an den Innendurchmesser bzw. den Außendurchmesser des Kreisrings.

Ein Dichtelement kann als eine Aufdickung, eine Sicke, eine sich infolge der Druckdifferenz einstellende Verformung der Spalthöhenverringerung der Dichtfläche oder ein Dichtband bzw. eine Dichtspitze ausgebildet sein. Ein oder mehrere Dichtelemente können sowohl an der Dichtfläche als auch an der Gegenfläche oder an beiden Flächen, insbesondere in deren Randbereichen, vorgesehen sein.

Zusätzlich oder alternativ zu einem Dichtelement kann ein Spaltbeeinflussungselement vorgesehen sein, welches vorzugsweise ein Drallbrecher oder eine hydrodynamisch wirksame Lagerfläche ist. Durch ein Spaltbeeinflussungselement läßt sich eine Strömungsbeeinflussung oder eine gezielte Einflußnahme auf das Kräftegleichgewicht zwischen Schließkraft und Gegenkraft bewirken. Ein Drallbrecher ist insbesondere bei Einsatz der Dichtungsanordnung zur Vermeidung oder Reduzierung von Spaltanregungseffekten einsetzbar. Eine hydrodynamisch wirksame Lagerfläche, welche durch einen sich verengenden mediengefüllten Spalt eine Gegenkraft erzeugt, dient vorzugsweise der Begrenzung der Dichtspalthöhe nach unten.

Der Verformungsbereich, welcher insbesondere in Richtung einer Maschinenachse beweglich ist, ist vorzugsweise in Art einer Wellenfeder, eines Balges, oder als eine Reihenschaltung von radial biegebeanspruchten Platten, insbesondere zur Umschließung einer Maschinenwelle (Kreisringplatten), ausgeführt. Durch eine einseitige Druckbeaufschlagung der Platten infolge der Druckdifferenz stellt sich eine Durchbiegung ein, die je nach Ausführung und Druck unterschiedlich groß ist. Das Verformungsverhalten läßt sich hierbei für eine Auslegungs-Druckdifferenz mit Hilfe analytischer Rechnungen oder kommerziell erhältlicher Computerprogramme durchführen. Je nach Ausführung erfolgen die Berechnungen mit gelagertem oder eingespanntem Rand des Verformungsbereiches. Insbesondere zur Kompensation von Relativverformungen, wie sie beispielsweise in Dampfturbinen auftreten, können mehrere hintereinander geschaltete Platten, die einen Verformungsbalg bilden, eingesetzt werden. Die einzelnen Platten können hierbei an ihren äußeren Rändern biegsam aneinander gebunden sein oder, insbesondere bei hohen Druckdifferenzen, biegesteif aneinander gebunden sein. Es ist ebenfalls möglich, eine Platte zu einer benachbarten Platte biegsam und zu einer anderen benachbarten Platte biegesteif anzubinden. Weiterhin können Platten unterschiedlicher Stärke vorgesehen sein, wobei insbesondere alternierend dünne und dicke Platten aufeinander folgen können. Vorzugsweise sind die Platten parallel zueinander und insbesondere senkrecht zu einer Maschinenachse angeordnet. Es ist ebenfalls möglich, benachbarte Platten mit einem spitzen Winkel zueinander anzuordnen. Selbstverständlich kann sich sowohl der Durchmesser der Platten über den Verformungsbereich hinweg ändern sowie die Teilung, d.h. der Abstand zweier benachbarter Platten, variieren. Neben einer Vielzahl, einen Balg bildenden Platten, kann auch eine einzelne Platte oder ein plattenförmiges Bauteil mit einer daran angebundenen Dichtfläche vorgesehen sein.

Insbesondere für den Einsatz in einer Rotationsmaschine mit einer rotierenden Welle sind die Dichtfläche und der Verformungsbereich ringförmig, vorzugsweise kreisringförmig ausgeführt. Vorzugsweise erstreckt sich der Dichtspalt in einer Dichtebene, die zur Abdichtung eines sich entlang einer Maschinenachse erstreckenden Radialspaltes gegenüber der Maschinenachse um 70° bis 110° geneigt ist. Vorzugsweise steht der Dichtspalt hierbei senkrecht zur Maschinenachse oder zu dem eigentlichen abzudichtenden Radialspalt. Bei Verwendung der Dichtungsanordnung kann eine Rotationsmaschine auch bereits so ausgelegt sein, daß von einem Radialspalt abgesehen ist. Dieser abzudichtende Radialspalt ist beispielsweise zwischen einer feststehenden Maschinenkomponente und einer drehbaren Maschinenkomponente gebildet. Hierbei ist die Dichtfläche entweder mit der feststehenden Maschinenkomponente oder der drehbaren Maschinenkomponente und entsprechend die Gegenfläche mit der jeweils anderen Maschinenkomponente verbunden.

Die Dichtungsanordnung wird vorzugsweise in einer Rotationsmaschine, insbesondere einer Pumpe, einer Turbine, wie einer Dampfturbine oder Gasturbine, einem Verdichter einer Gasturbine oder in einem Generator verwendet. Hierbei kann die Dichtungsanordnung mit bereits vorhandenen Dichtungen in Reihe geschaltet werden oder diese teilweise bzw. ganz ersetzen. Bei geringen Dichtungsanforderungen an zu der Dichtungsanordnung benachbarten herkömmlichen Dichtungen können diese insbesondere zur Erhöhung der Betriebssicherheit dann mit einem größeren Spiel versehen sein. Die Dichtungsanordnung kann hierbei an der Seite mit dem höheren Druck an einem abzudichtenden Spalt eingesetzt werden, so daß der Druck innerhalb des abzudichtenden Spaltes absinkt, was zu einer Verminderung einer etwaigen Spaltanregung führt. Durch die kompakte Bauweise der Dichtungsanordnung mit geringer Masse und dünnwandiger Ausführung des Verformungsbereiches und der Dichtfläche können Verformungen durch bestehende Temperaturdifferenzen oder durch instationäre Wärmeübergangsvorgänge weitgehend vermieden werden. Aufgrund der geringen Wandstärke stellen sich auch allenfalls geringe Temperaturdifferenzen über die Dichtfläche sowie den Verformungsbereich ein. In einer Dampfturbine erfährt zudem der durch die Dichtungsanordnung strömende Dampf eine Drosselung mit nur einer geringen Temperaturabsenkung, so daß vor und hinter der Dichtungsanordnung etwa die gleiche Temperatur vorliegt. Instationären Temperaturänderungen kann die Dichtung aufgrund ihrer vergleichsweise kleinen Massen schnell folgen. Darüber hinaus führen auch geringe radiale Verlagerungen der rotierenden Komponente und der feststehenden Komponente, welche den abzudichtenden Spalt begrenzen, zu keiner Beeinflussung der Dichtwirkung der Dichtanordnung.

Ein ringförmiger Verformungsbereich sowie die Dichtungsfläche können abtragend, insbesondere spanend, urformend, umformend oder fügend sowie durch eine Kombination dieser Verfahren hergestellt werden. Der Verformungsbereich kann fest in die feststehende Maschinenkomponente oder rotierende Maschinenkomponente eingespannt sein. Er besteht vorzugsweise aus einem hochwarmfesten Werkstoff, insbesondere einem Stahl, einer Nickelbasis- oder Kobaltbasislegierung. Die Dichtfläche kann ebenfalls aus einem hochwarmfesten Werkstoff bestehen. Für die konstruktive Ausgestaltung der Dichtungsanordnung zur Erzielung einer möglichst hohen Dichtwirkung und eines Gleichgewichtes zwischen den auf die Dichtfläche wirkenden Kräften (Schließkraft, Gegenkraft) können die folgenden Parameter variiert werden: Durchmesser des Balges (Kreisringdurchmesser, Kreisringstärke); Stärke (Wanddicke) der Dichtfläche sowie der den Balg bildenden Platten; Einspannung der der Befestigung dienenden Platte des Balges; Anzahl der Platten des Balges; Durchmesser der Dichtungsfläche; Steifigkeit der Dichtungsfläche; Länge und Durchmesserlage des Dichtspaltes; Lageart; Spaltverengung der Dichtelemente; Montagespiel sowie Gestaltung der Übergänge (Anbindungsbereiche) zwischen benachbarten Platten.

Neben der Abdichtung eines Spaltes gebildet zwischen einer Turbinenwelle als rotierende Maschinenkomponente und einen Turbinengehäuseteil als feststehende Maschinenkomponente ist in einer Ausgestaltung der Dichtungsanordnung auch eine Abdichtung zwischen einer Laufschaufel, insbesondere einem komplexen Laufschaufelkranz, und dem Turbinengehäuse ermöglicht. Hierbei ist vorzugsweise die Gegenfläche an der Laufschaufel angeordnet und die Dichtfläche über den Verformungsbereich mit dem Turbinengehäuse festverbunden. Selbstverständlich kann die Dichtungsanordnung auch zwischen einer Leitschaufel, insbesondere einem Leitschaufelkranz, und einer Turbinenwelle angeordnet sein.

Anhand der in der Zeichnung dargestellten Ausführungsbeispiele wird die Dichtungsanordnung, insbesondere in einer Dampfturbine näher erläutert. Es zeigen teilweise schematisiert und nicht maßstäblich:
- FIG 1: einen Längsschnitt einer Hochdruck-Dampfturbine,
- FIG 2: einen Ausschnitt eines Längsschnittes durch eine Turbinenstufe mit einer Dichtungsanordnung,
- FIG 3: eine Dichtungsanordnung im Längsschnitt zur Abdichtung einer Turbinenwelle,
- FIG 4: eine Dichtungsanordnung zur Abdichtung eines Spaltes zwischen in gleicher Ebene endender Maschinenkomponenten,
- FIG 5: eine Dichtungsanordnung mit einem als Dichtungsfläche ausgebildeten Verformungsbereich,
- FIG 6 bis: 10 jeweils einen Längsschnitt durch eine Dichtfläche mit Dichtelementen,
- FIG 11 bis: 14 jeweils eine Dichtfläche mit einem Spaltbeeinflussungselement und
- FIG 15 bis: 20 einen Längsschnitt durch eine jeweilige Ausführungsform eines balgförmigen Verformungsbereiches.

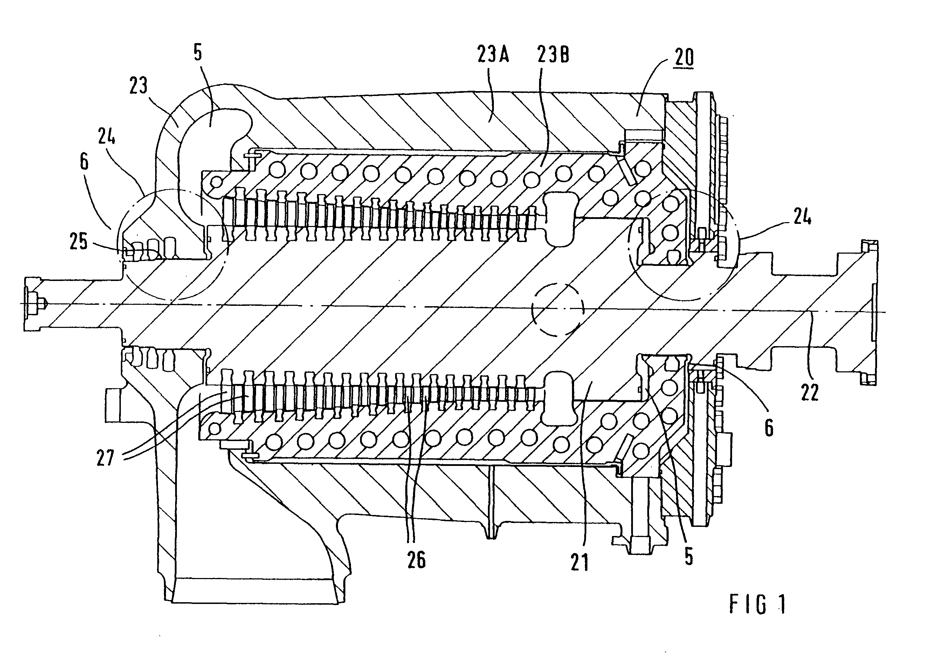

Die Bedeutung der Bezugszeichen in den Figuren 1 bis 20 ist für jede Figur gleich.

In FIG 1 ist eine Strömungsmaschine 20, eine Hochdruck-Teil-Dampfturbine 20, in einem Längsschnitt dargestellt. Die Dampfturbine 20 weist eine rotierbare Maschinenkomponente 21 eine Turbinenwelle 21 auf, die entlang einer Maschinenachse 22 gerichtet ist. Die Turbinenwelle 21 ist von einem Turbinengehäuse 23 umfassend ein Turbinenaußengehäuse 23A und ein Turbineninnengehäuse 23B (Leitschaufelträger 23B) umgeben, welches an zwei axial voneinander beabstandeten Dichtungsbereichen 24 an die Turbinenwelle 21 unter Belassung eines jeweiligen Radialspaltes 25 angrenzt. Der Radialspalt 25 erstreckt sich entlang der Maschinenachse 22 und weist eine Ausdehnung in radialer Richtung auf, so daß eine ringförmige Querschnittsfläche des Radialspaltes 25 gebildet ist. Zwischen den beiden Dichtungsbereichen 24 sind auf der Turbinenwelle 21 Laufschaufeln 27 und an dem Turbineninnengehäuse 23B Leitschaufeln 26 angeordnet, zwischen denen hindurch bei Betrieb der Dampfturbine 20 heißer unter hohem Druck stehender Dampf hinduchströmt. Bei Betrieb der Dampfturbine 20 ist somit im Inneren des Turbinengehäuses 23 ein erster Druckbereich 5 mit einem hohen Druck des Dampfes gebildet. Dieser erste Druckbereich 5 grenzt innenseitig an die beiden Dichtungsbereiche 24 an. Außenseitig an die Dichtungsbereiche 24 grenzt jeweils ein zweiter Druckbereich 6 mit einem geringeren Druck an. Aufgrund der Druckdifferenz zwischen dem ersten Druckbereich 5 und dem jeweiligen zweiten Druckbereich 6 strömt, je nach Art der Abdichtung, mehr oder weniger Dampf von dem ersten Druckbereich 5 in den jeweiligen zweiten Druckbereich 6 durch den Radialspalt 25 hinaus.

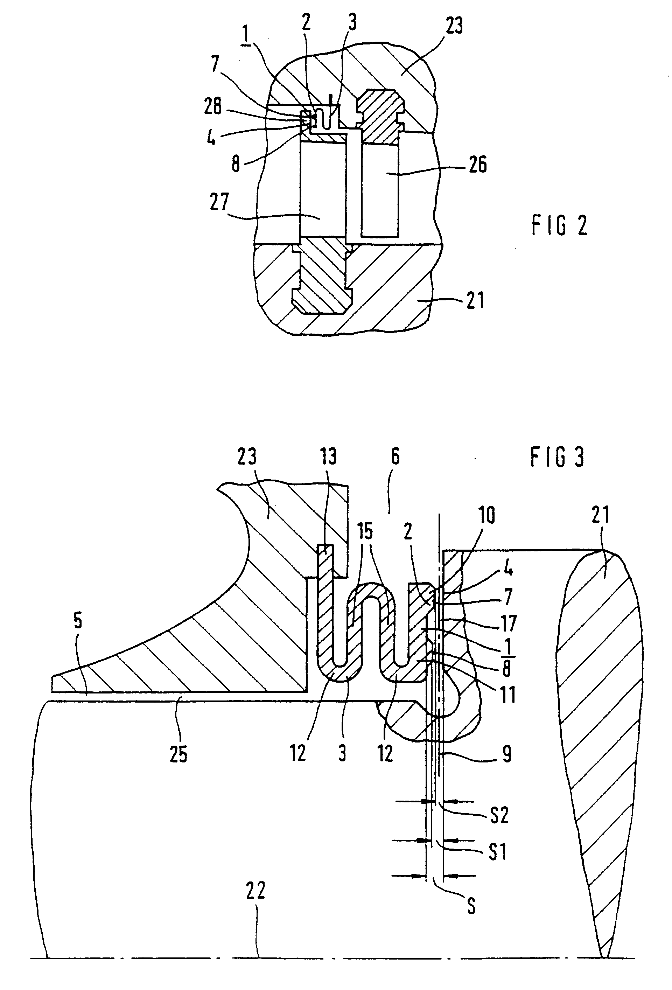

In FIG 3 ist eine Dichtungsanordnung 1 mit einem Verformungsbereich 3 in einem Längsschnitt dargestellt. Der Verformungsbereich 3 erstreckt sich in Richtung der Maschinenachse 22 und ist aus drei axial hintereinander angeordneten kreisringförmigen Platten 15 aufgebaut, wobei benachbarte Platten 15 über einen jeweiligen U-förmig gebogenen Anbindungsbereich 12 miteinander verbunden sind. An einem axialen Ende des Verformungsbereiches ist die dort angeordnete Platte 15 in einem Einspannbereich 13 mit dem Turbineninnengehäuse 23B, d.h. einer feststehenden Maschinenkomponente, fest verbunden. An dem anderen axialen Ende des Verformungsbereiches 3 ist über einen Anbindungsbereich 12 eine plattenförmige Dichtfläche 2 angeordnet. Die Dichtungsanordnung 1 mit Dichtfläche 2 und Verformungsbereich 3 umschließt eine Turbinenwelle 21, d.h. eine drehbare, rotierende Maschinenkomponente. Die Turbinenwelle 21 erstreckt sich axial hinter der Dichtungsanordnung 1 in radialer Richtung und bildet so der Dichtfläche 2 axial gegenüberliegend eine Gegenfläche 4. Durch die Dichtfläche 2 und die Gegenfläche 4 ist ein axialer Dichtspalt 17 gebildet, der sich entlang einer Spalthauptrichtung 9 senkrecht zur Maschinenachse 22 erstreckt. Der Dichtspalt 17 weist eine maximale Höhe S auf. An einem äußeren Randbereich 10 der Dichtfläche 2 ist ein in den Dichtspalt 17 hineinragendes äußeres Dichtelement 7 angeordnet, welches zu einer Verringerung der Höhe S des Dichtspaltes auf eine Höhe S2 führt. An einem inneren Randbereich 11 der Dichtfläche 2, welcher einen geringeren Durchmesser als der äußere Randbereich 10 aufweist, ist ein inneres Dichtelement 8 angeordnet. Dieses Dichtelement 8 ragt ebenfalls in den Spalt 17 hinein und führt zu einer Verringerung der Höhe S des Spaltes auf eine Höhe S1. Die Höhe S2 ist hierbei geringer als die Höhe S1. An den inneren Randbereich 11 grenzt ein erster Druckbereich 5 mit einem hohen Druck des Arbeitsmediums der Dampfturbine, insbesondere des Dampfes der Dampfturbine 20, an. An den äußeren Randbereich 11 grenzt ein zweiter Druckbereich 6 mit einem gegenüber dem ersten Druckbereich 5 geringerem Druck an.

Aufgrund der Druckdifferenz zwischen dem ersten Druckbereich 5 und dem zweiten Druckbereich 6 tritt eine axiale Druckverformung der kreisringförmigen Platten 15 des Verformungsbereiches 3 auf, wodurch eine Verringerung der axialen Höhe S des Dichtspaltes 17 gegenüber dem Zustand bei einer geringeren Druckdifferenz, insbesondere der Druckdifferenz mit dem Wert 0, erreicht ist. Durch eine Reihenschaltung der Platten 15 in dem Verformungsbereich 3 erfolgt eine Reduzierung der Höhe S des Dichtspaltes 17 selbst bei relativ großen thermischen Verformungen zwischen der Turbinenwelle 21 und dem Turbinengehäuse 23 der Dampfturbine 20.

Die unterschiedliche Verringerung der Höhe S des Spaltes 17 durch das äußere Dichtelement 7 und das innere Dichtelement 8 führt zu einer Verringerung der Strömungsgeschwindigkeit des Dampfes in dem Dichtspalt 17 und gleichzeitig zu einer Erhöhung des Druckes in dem Dichtspalt 17 bis etwa auf den Wert des Druckes des ersten Druckbereiches 5. Hierdurch wird eine axial wirkende Gegenkraft auf die Dichtfläche 2 erzeugt, welche einer durch die Druckdifferenz in Richtung des Dichtspaltes 17 von dem Verformungsbereich 3 auf die Dichtfläche 2 ausgeübten Schließkraft entgegenwirkt. Die Dichtungsanordnung 1 ist somit selbsteinstellend in dem Sinne, daß ein engerer Dichtspalt eine höhere Gegenkraft (Rückstellkraft) bewirkt. Hierdurch ist die Erreichung einer konstruktiv vorwählbaren, kleinen Höhe S des Dichtspaltes (Dichtspalthöhe) durch im Gleichgewicht befindliche entgegengerichtete Schließkraft und Gegenkraft (Andruck- und Dichtungskraft) erreicht.

Bei einer geringeren Druckdifferenz als der bei Betrieb der Dampfturbine herrschenden Druckdifferenz zwischen dem ersten Druckbereich 5 und dem zweiten Druckbereich 6 entsteht eine größere Höhe S des Dichtspaltes 17. Hierdurch ist die Gefahr eines Anstreifens der Dichtelemente 7,8 an die Gegenfläche 4 während instationarer Vorgänge und einem Durchfahren der kritischen Drehzahl der Dampfturbine 20 aufgrund des größeren Spiels, d.h. der größeren Höhe S des Spaltes 17, vermieden.

In dem dargestellten Ausführungsbeispiel ist der Anbindungsbereich 12 der Dichtfläche 2 an den Verformungsbereich 3 am inneren Randbereich 11 der Dichtfläche 2 durchgeführt. Es versteht sich, daß der Anbindungsbereich 12 auch am äußeren Randbereich 10 der Dichtfläche 2 angeordnet sein kann. Bei entsprechender Materialauslegung der Dichtungsanordnung 1 kann der Verformungsbereich 3 auch an die drehbare Maschinenkomponente 21, die Turbinenwelle 21, angebracht sein.

In FIG 2 ist ein Ausschnitt eines Längsschnittes einer Dampfturbine 20 dargestellt. An einer Laufschaufel 27, insbesondere einem Laufschaufelkranz, ist ein radial nach außen weisender Dichtsteg 28 angeordnet, der eine Gegenfläche 4 bildet. Axial von dieser Gegenfläche 4 beabstandet ist eine Dichtfläche 2 einer Dichtungsanordnung 1 angeordnet. Die Dichtfläche 2 ist ebenfalls radial gerichtet und mit einem axial beweglichen Verformungsbereich 3 verbunden.

Die Dichtfläche 2 weist analog zur FIG 3 ein äußeres Dichtelement 7 und ein inneres Dichtelement 8 auf. Durch die Dichtanordnung 1 wird somit eine Abdichtung eines Radialspaltes zwischen der Laufschaufel 27 und dem Gehäuse 23 erreicht. Die Dichtwirkung beruht wie bereits zur FIG 3 beschrieben, auf einer Druckdifferenz induzierten axialen Ausdehnung (Verformung) des Verformungsbereiches 3 bei gleichzeitiger Erzeugung einer Gegenkraft in dem Dichtspalt 17, der zwischen der Dichtfläche 2 und der Gegenfläche 4 gebildet ist.

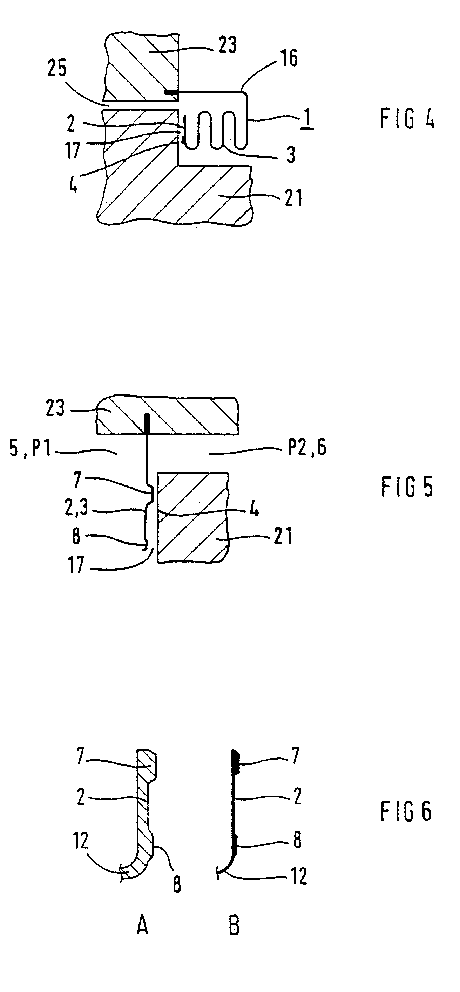

In FIG 4 ist in einem Längsschnitt eine Dichtungsanordnung 1 mit einem Verformungsbereich 3 und einer damit verbundenen Dichtfläche 2 dargestellt. Die Dichtungsanordnung 1 dient der Abdichtung eines Radialspaltes 25, der zwischen einer feststehenden Maschinenkomponente 23 und einer rotierenden Maschinenkomponente 21 gebildet ist. Der Radialspalt 25 endet in einer Ebene, in der zumindest unmittelbar in einer Umgebung des Radialspaltes 25 sowohl die feststehende Maschinenkomponente 23 als auch die rotierende Maschinenkomponente 21 enden. An der feststehenden Maschinenkomponente 23 ist ein Befestigungsring 16 angebracht, welcher sich in axialer Richtung von dem Radialspalt 25 erstreckt. Nach einem nicht näher spezifizierten axialen Abstand knickt der Befestigungsring 16 in radialer Richtung ab und erstreckt sich radial über den Radialspalt 25 hinaus, so daß der Befestigungsring 16 in radialer Richtung mit der rotierenden Maschinenkomponente 21 überlappt. An dem radialen Bereich des Befestigungsringes 16 ist in Richtung zu dem Radialspalt 25 ein axial beweglicher Verformungsbereich 3 angeordnet, der in eine Dichtfläche 2 übergeht. Die Dichtfläche 2 ist axial durch einen Dichtspalt 17 von einer Gegenfläche 4 der rotierenden Maschinenkomponente 21 beabstandet. Analog zu den FIG 2 und 3 ist mithin in FIG 4 ein axialer Dichtspalt 17 gebildet, der durch eine Druckdifferenz induziert selbsteinstellende Dichtungsanordnung 1 abdichtbar ist. Hierdurch ist auch eine Abdichtung des Radialspaltes 25 gegeben.

In FIG 5 ist eine Dichtungsanordnung 1 dargestellt, bei der Dichtfläche 2 und Verformungsbereich 3 in Form einer einzigen Platte oder eines plattenförmigen Bauteils realisiert sind. Die Dichtplatte 2 ist durch einen Dichtspalt 17 von einer Gegenfläche 4 beabstandet. Die Dichtfläche 2 sowie die Gegenfläche 4 erstrecken sich jeweils in radialer Richtung, wobei sich die Dichtfläche 2 über die Gegenfläche 4 hinaus erstreckt und fest mit einer feststehenden Maschinenkomponente 23 verbunden ist. Durch die Dichtfläche 2 ist ein erster Druckbereich 5 mit einem hohen Druck P1 von einem zweiten Druckbereich 6 mit einem geringeren Druck P2 getrennt. Aufgrund der Druckdifferenz erfährt die Dichtfläche 2 eine Biegung in Richtung der Gegenfläche 4.

In FIG 6 ist in einem Längsschnitt die Dichtfläche 2 dargestellt, wobei in FIG 6A die Dichtfläche biegesteif ausgeführt ist, so daß aufgrund der Druckdifferenz zwischen dem hohen Druck P1 und dem niedrigeren Druck P2 keine Verbiegung der Dichtfläche 2 stattfindet. Gemäß FIG 6B ist die Dichtfläche 2 biegeweich, so daß eine Verbiegung der Dichtfläche 2 aufgrund der Druckdifferenz (P1 - P2) auftreten kann.

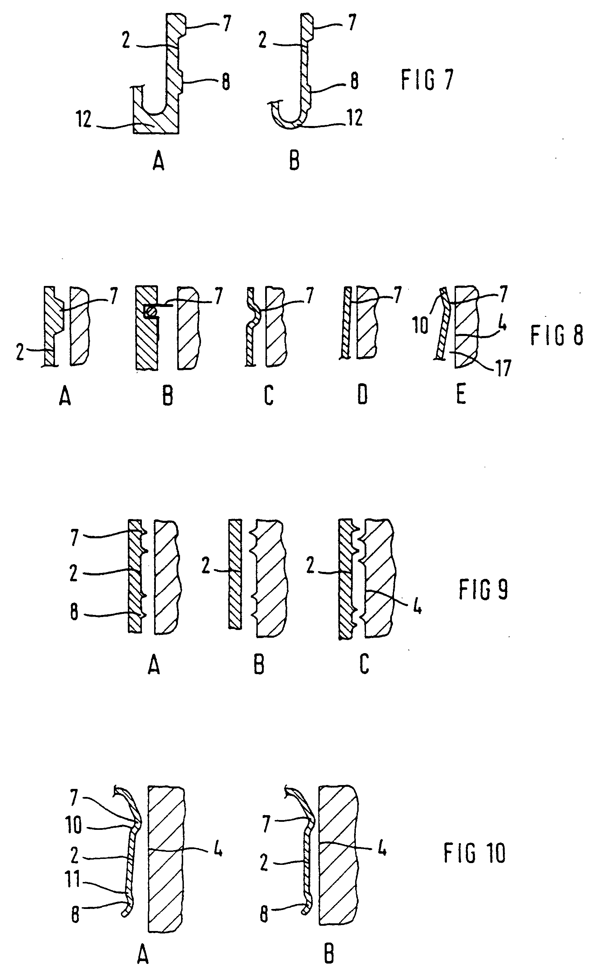

Gemäß FIG 7A ist der Anbindungsbereich 12 der Dichtfläche 2 zu dem Verformungsbereich 3 biegesteif im Hinblick auf die Druckdifferenz zwischen dem hohen Druck P1 und dem geringeren Druck P2 ausgeführt. Die Darstellung gemäß FIG 7B zeigt eine biegeweiche Ausführung des Anbindungsbereiches 12.

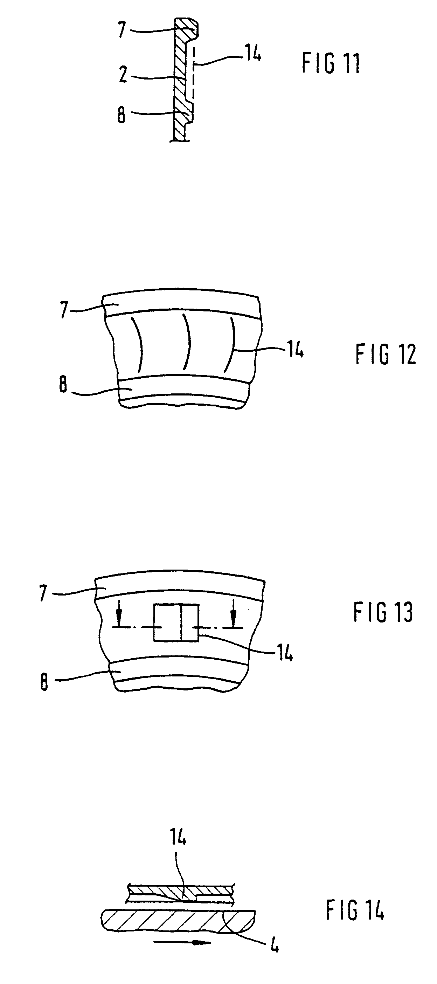

In den FIG 8A bis 8E ist jeweils eine Ausführung des äußeren Dichtelementes 7 dargestellt. FIG 8A zeigt ein im Querschnitt stegförmiges Dichtelement 7. Gemäß FIG 8B ist in der Dichtfläche 2 eine nutförmige Vertiefung angeordnet, in der eine drahtförmige Dichtspitze eingestemmt ist, welche sich in den Dichtspalt 17 hineinerstreckt. Gemäß FIG 8C weist die Dichtfläche 2 ein Dichtelement 7 in Form einer in den Dichtspalt 17 hineinragenden Sicke auf. Gemäß FIG 8D und 8E erfolgt eine Reduzierung der Höhe S des Dichtspaltes 17 durch eine stärkere Verformung des äußeren Randbereiches 10 gegenüber dem inneren Randbereich 11. In FIG 8E ist die Gestaltung (Formgebung) der Dichtfläche 2 so gewählt, daß die Dichtfläche 2 sich zu dem Dichtspalt 17 hin in dem äußeren Randbereich 10 verformt.

In den FIG 9A, B und C sind jeweils an dem äußeren Randbereich 10 und dem inneren Randbereich 11 der Dichtfläche 2 bzw. der Gegenfläche 4 ein Paar radial benachbarter Dichtspitzen 7, 8 angeordnet. Gemäß FIG 9C weist sowohl die Dichtfläche 2 als auch die Gegenfläche 4 jeweils zwei Paare von Dichtspitzen 7, 8 auf, wobei diese jeweils paarweise in Art einer Labyrinthdichtung ineinander eingreifen.

In FIG 10A ist eine Dichtfläche 2 dargestellt, bei der in undeformierten Zustand der innere Randbereich 11 deutlich weiter von der Gegenfläche 4 beabstandet ist als der äußere Randbereich 10. Bei Aufbringen einer Druckdifferenz erfolgt eine Verformung der Dichtfläche 2 so, daß der innere Randbereich 11 deutlich stärker in Richtung der Gegenfläche 4 deformiert wird als der äußere Randbereich 10, so daß die Höhe S1 des Dichtspaltes 17 am inneren Randbereich nur noch geringfügig größer ist als die Höhe S2 des Dichtspaltes 17 am äußeren Randbereich 10.

FIG 11 zeigt eine Dichtfläche 2 mit einem äußeren Dichtelement 7 und einem inneren Dichtelement 8 in einem Längsschnitt, wobei zwischen den Dichtelementen 7, 8 ein Spaltbeeinflussungselement 14 vorgesehen ist. In einer Draufsicht auf die Dichtfläche 2 mit Spaltbeeinflussungselement 14 ist gemäß FIG 12 das Spaltbeeinflussungselement 14 als ein Drallbrecher ausgeführt. Der Drallbrecher bewirkt eine Strömungsbeeinflussung zur Bekämpfung von,Spaltanregungseffekten.

In der Draufsicht auf die Dichtfläche 2 gemäß FIG 13 und 14 ist eine hydrodynamisch wirksame Axiallagerfläche dargestellt, die durch einen sich verengenden mediengefüllten Spalt eine axiale Kraft aufbaut und dadurch einer weiteren Verminderung der Höhe S des Dichtspaltes 17 entgegenwirkt.

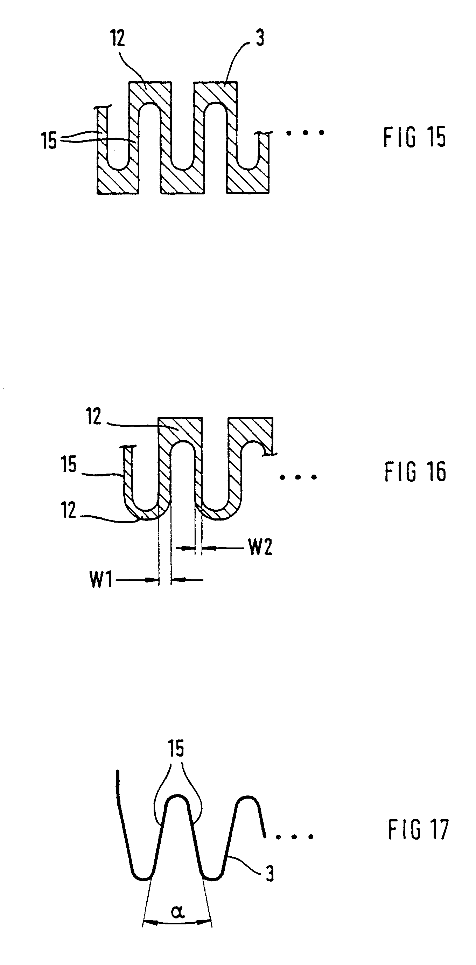

In den FIG 15 bis 20 sind balgförmige Ausführungen des Verformungselementes 13 dargestellt, wobei gemäß FIG 15 die Anbindungsbereiche 12 benachbarter Platten 15 des Verformungsbereiches 3 biegesteif gegenüber der Druckdifferenz zwischen dem ersten Druckbereich 5 mit hohem Druck und dem zweiten Druckbereich 6 mit geringerem Druck ausgeführt sind.

Gemäß FIG 16 ist ein äußerer Anbindungsbereich 12 biegesteif und ein innerer Anbindungsbereich 12 mit geringerem Durchmesser biegeweich ausgeführt. Zudem sind in axialer Richtung alternierend Platten 15 mit einer Wandstärke W1 und Platten 15 mit einer Wandstärke W2 in axialer Richtung angeordnet. Die Wandstärke W1 ist hierbei größer als die Wandstärke W2. Selbstverständlich sind auch mehr als zwei unterschiedliche Wandstärken sowie eine andere Abfolge der Platten unterschiedlicher Wandstärke möglich.

Gemäß FIG 17 sind einander unmittelbar benachbarte Platten 15 nicht parallel zueinander, wie dies in FIG 15 und 16 dargestellt wurde, sondern gegeneinander um einen spitzen Winkel α im Bereich zwischen 5° und 20° geneigt. Die Größe des Winkels α ist entsprechend der Anforderung an die Dichtungsanordnung 1, beispielsweise vorgegeben durch die Betriebsbedingungen einer Strömungsmaschine oder einer Rotationsmaschine, wie einem Turbogenerator, durchführbar.

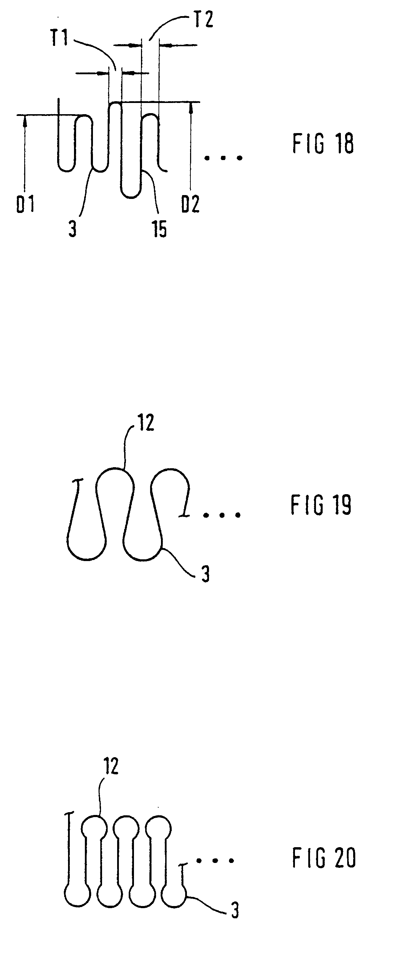

Gemäß FIG 18 weist der Verformungsbereich 3 eine Mehrzahl von Platten 15 auf, die unterschiedliche Durchmesser aufweisen können, wobei die Durchmesser zwischen einem maximalen Durchmesser D2 und einem minimalen Durchmesser D1 betragen. Weiterhin ist die Teilung des Verformungsbereiches 3 unterschiedlich, d.h. der Abstand T1, T2 benachbarter Paare von Platten 15 voneinander verschieden.

Gemäß FIG 19 sind die Platten 15 gegeneinander geneigt, so daß der Anbindungsbereich bauchformig ausgeführt ist. Gemäß FIG 20 sind die Platten 15 parallel zueinander angeordnet und der Anbindungsbereich annähernd kreisförmig mit einem Durchmesser größer als der Abstand benachbarter Platten 15 ausgeführt.

## Patentansprüche

1. Dichtungsanordnung (1) zur Abdichtung eines ersten Bereiches (5) von einem zweiten Bereich (6), welche Bereiche (5,6) jeweils mit einem Fluid durchströmbar und/oder befüllbar und auf einem unterschiedlichen Druck (P1, P2) haltbar sind, so daß ein Differenzdruck (P1-P2) gebildet ist, mit einem Verformungsbereich (3) und einer damit verbundenen Dichtfläche (2), welche durch einen Dichtspalt (17) von einer Gegenfläche (4) beabstandet ist, wobei die Höhe (S) des Dichtspaltes (17) durch eine Verformung des Verformungsbereiches (3) infolge einer durch den Differenzdruck (P1-P2) ausgeübten Kraft einstellbar ist, wobei bei der Dichtungsanordnung an der Dichtfläche (2) und/oder der Gegenfläche (4) zumindest ein in den Dichtspalt (17) oder die Dichtfläche (2) hineinragendes Dichtelement (7,8) vorgesehen ist, wobei bei der Dichtungsanordnung (1) zwei Dichtelemente (7,8) vorgesehen sind, die in der Spalthauptrichtung (9), welche einer differenzdruck-induzierte Strömungsrichtung entspricht, voneinander beabstandet sind, **dadurch gekennzeichnet, dass** bei der Dichtungsanordnung (1) das eine Dichtelemente (7) eine Reduzierung der Spalthöhe (S) auf eine erste Höhe (S1) und das andere Dichtelement (8) auf eine zweite von der ersten Höhe (S1) verschiedene Höhe (S2) bewirkt.

2. Dichtungsanordnung (1) nach Anspruch 1, bei der an der Dichtfläche (2) und/oder der Gegenfläche (4) zumindest ein Spaltbeeinflussungselement (14), wie ein Drallbrecher oder eine hydrodynamische Lagerfläche, vorgesehen ist.

3. Dichtungsanordnung (1) nach einem der vorhergehenden Ansprüche, bei der der Verformungsbereich (3) und/oder die Dichtfläche (2) ringförmig sind/ist.

4. Dichtungsanordnung (1) nach einem der vorhergehenden Ansprüche, bei der der Verformungsbereich (3) balgförmig ausgebildet ist.

5. Dichtungsanordnung (1) nach einem der vorhergehenden Ansprüche zur Abdichtung eines sich entlang einer Maschinenachse (22) erstreckenden Spaltes (25), bei der der Dichtspalt (17) sich in einer Dichtebene erstreckt, die gegenüber der Maschinenachse um 70° bis 110° geneigt ist.

6. Dichtungsanordnung (1) nach einem der vorhergehenden Ansprüche bei der der Verformungsbereich (3) und/oder die Dichtfläche (2) aus einem hochwarmfesten Stahl, einer Nickelbasis-Legierung oder einer Kobaltbasis-Legierung gebildet sind/ist.

7. Dichtungsanordnung (1) nach einem der vorhergehenden Ansprüche, bei der die Dichtfläche (2) geometrisch so ausgestaltet ist, daß sich infolge einer Druckdifferenz an der Dichtfläche (2) eine die Höhe (S) des Dichtspaltes (17) verringernde Verformung der Dichtfläche (2) einstellt.

8. Dichtungsanordnung (1) nach einem der vorhergehenden Ansprüche bei der die Dichtfläche (2) an einer feststehenden Maschinenkomponente (23) und die Gegenfläche (4) an einer um eine Maschinenachse (22) drehbaren Maschinenkomponente (21) oder umgekehrt angeordnet sind.

9. Verwendung einer Dichtungsanordnung (1) nach einem der Ansprüche 1 bis 8 in einer Rotationsmaschine (20), insbesondere einer Turbine, einem Verdichter oder einem Generator.

10. Verwendung einer Dichtungsanordnung (1) nach einem der Ansprüche 1 bis 8, bei der die Gegenfläche (4) an einer Laufschaufel (27) einer Strömungsmaschine (20), insbesondere einer Dampfturbine, angeordnet ist.

11. Verwendung einer Dichtungsanordnung (1) nach einem der Ansprüche 1 bis 8, bei der die Dichtfläche (2) an einer Leitschaufel (26) einer Strömungsmaschine (20), insbesondere einer Dampfturbine, angeordnet ist.

12. Turbine mit einer Dichtungsanordnung nach einem der Ansprüche 1 bis 8.

13. Verdichter mit einer Dichtungsanordnung nach einem der Ansprüche 1 bis 8.

14. Generator mit einer Dichtungsanordnung nach einem der Ansprüche 1 bis 8.

## Claims

1. Sealing arrangement (1) for sealing off a first region (5) from a second region (6), through which regions (5, 6) a fluid can flow in each case and/or which can be filled with a fluid in each case and can be kept at a differential pressure (P1, P2), so that a differential pressure (P1-P2) is formed, having a deformation region (3) and a sealing surface (2) connected thereto, which sealing surface (2) is spaced apart from an opposing surface (4) by means of a sealing gap (17), in which case the height (S) of the sealing gap (17) can be set by a deformation of the deformation region (3) as a result of a force exerted by the differential pressure (P1-P2), in which sealing arrangement (1) at least one sealing element (7, 8) is provided on the sealing surface (2) and/or the opposing surface (4) and projects into the sealing gap (17) or the sealing surface (2), in which sealing arrangement (1) two sealing elements (7, 8) are provided which are at a distance from one another in the gap main direction (9), which corresponds to a differential-pressure-induced flow direction, **characterized in that** in the sealing arrangemment (1) the one sealing element (7) reduces the gap height (S) to a first height (S1), and the other sealing element (8) reduces the gap height (S) to a second height (S2) which is different from the first height (S1).

2. Sealing arrangement (1) according to Claim 1, in which at least one gap-influencing element (14), such as a swirl breaker or a hydrodynamic bearing surface, is provided on the sealing surface (2) and/or the opposing surface (4).

3. Sealing arrangement (1) according to one of the preceding claims, in which the deformation region (3) and/or the sealing surface (2) are/is ring-shaped.

4. Sealing arrangement (1) according to one of the preceding claims, in which the deformation region (3) is of bellows-shaped design.

5. Sealing arrangement (1) according to one of the preceding claims for sealing a gap (25) extending along a machine axis (22), in which sealing arrangement (1) the sealing gap (17) extends in a sealing plane which is inclined relative to the machine axis by 70° to 110°.

6. Sealing arrangement (1) according to one of the preceding claims, in which the deformation region (3) and/or the sealing surface (2) are/is formed from a high-temperature-resistant steel, a nickel-base alloy or a cobalt-base alloy.

7. Sealing arrangement (1) according to one of the preceding claims, in which the sealing surface (2) is configured geometrically in such a way that, as a result of a pressure difference at the sealing surface (2), a deformation of the sealing surface (2) occurs, this deformation reducing the height (S) of the sealing gap (17).

8. Sealing arrangement (1) according to one of the preceding claims, in which the sealing surface (2) is arranged on a stationary machine component (23), and the opposing surface (4) is arranged on a machine component (21) rotatable about a machine axis (22), or vice versa.

9. Use of a sealing arrangement (1) according to one of Claims 1 to 8, which is arranged in a rotary machine (20), in particular a turbine, a compressor or a generator.

10. Use of a sealing arrangement (1) according to one of Claims 1 to 8, in which the opposing surface (4) is arranged on a moving blade (27) of a fluid-flow machine (20), in particular a steam turbine.

11. Use of a sealing arrangement (1) according to one of Claims 1 to 8, in which the sealing surface (2) is arranged on a guide blade (26) of a fluid-flow machine (20), in particular a steam turbine.

12. Turbine having a sealing arrangement according to one of Claims 1 to 8.

13. Compressor having a sealing arrangement according to one of Claims 1 to 8.

14. Generator having a sealing arrangement according to one of Claims 1 to 8.

## Revendications

1. Agencement d'étanchéité (1) destiné à assurer l'étanchéité d'une première zone (5) par rapport à une seconde zone (6), ces zones (5, 6) pouvant être traversées chacune par un écoulement de fluide et/ou être remplies de fluide et être maintenues à une pression différente (P1, P2) de manière à former une pression différentielle (P1-P2), l'agencement comprenant une zone déformable (3) et une surface d'étanchéité (2) qui y est liée et est à distance d'une surface conjuguée (4) par un interstice d'étanchéité (17), la hauteur (S) de l'interstice d'étanchéité (17) pouvant être réglée par une déformation de la zone déformable (3) suite à une force exercée par la pression différentielle (P1-P2), au moins un élément d'étanchéité (7, 8), qui s'engage dans l'interstice d'étanchéité (17) ou la surface d'étanchéité (2), étant prévu sur la surface d'étanchéité (2) et/ou la surface conjuguée (4) dans l'agencement d'étanchéité (1), deux éléments d'étanchéité (7, 8) étant prévus dans l'agencement d'étanchéité (1) en étant espacés l'un de l'autre dans la direction principale (9) de l'interstice, qui correspond à la direction d'écoulement induite par la pression différentielle, **caractérisé en ce que** dans l'agencement d'étanchéité (1), un premier (7) desdits éléments d'étanchéité produit une réduction de la hauteur d'interstice (S) à une première hauteur (S1), et l'autre élément d'étanchéité (8) produit une réduction de la hauteur à une seconde hauteur (S2) différente de la première hauteur (S1).

2. Agencement d'étanchéité (1) selon la revendication 1, dans lequel sur la surface d'étanchéité (2) et/ou la surface conjuguée (4) est prévu au moins un élément (14) ayant une influence sur l'interstice, tel qu'un brise-tourbillon ou une surface de palier hydrodynamique.

3. Agencement d'étanchéité (1) selon l'une des revendications précédentes, dans lequel la zone déformable (3) et/ou la surface d'étanchéité (2) sont/est de forme annulaire.

4. Agencement d'étanchéité (1) selon l'une des revendications précédentes, dans lequel la zone déformable (3) est réalisée sous forme de soufflet.

5. Agencement d'étanchéité (1) selon l'une des revendications précédentes, destiné à assurer l'étanchéité d'un interstice (25) s'étendant le long d'un axe de machine (22), dans lequel l'interstice d'étanchéité (17) s'étend dans un plan d'étanchéité qui est incliné de 70° à 110° par rapport à l'axe de la machine.

6. Agencement d'étanchéité (1) selon l'une des revendications précédentes, dans lequel la zone déformable (3) et/ou la surface d'étanchéité (2) sont/est réalisée(s) en un acier réfractaire, un alliage à base de nickel ou un alliage à base de cobalt.

7. Agencement d'étanchéité (1) selon l'une des revendications précédentes, dans lequel la surface d'étanchéité (2) est d'une configuration géométrique telle, que suite à une pression différentielle au niveau de la surface d'étanchéité (2), il s'établit une déformation de la surface d'étanchéité (2) réduisant la hauteur (S) de l'interstice d'étanchéité (17).

8. Agencement d'étanchéité (1) selon l'une des revendications précédentes, dans lequel la surface d'étanchéité (2) est disposée sur un composant de machine fixe (23), et la surface conjuguée (4) sur un composant de machine rotatif (21) pouvant tourner autour d'un axe (22) de la machine, ou inversement.

9. Utilisation d'un agencement d'étanchéité (1) selon l'une des revendications 1 à 8 dans une machine tournante (20), notamment une turbine, un compresseur ou une génératrice.

10. Utilisation d'un agencement d'étanchéité (1) selon l'une des revendications 1 à 8, pour laquelle la surface conjuguée (4) est disposée sur une aube mobile (27) d'une turbomachine (20), notamment d'une turbine à vapeur.

11. Utilisation d'un agencement d'étanchéité (1) selon l'une des revendications 1 à 8, pour laquelle la surface d'étanchéité (2) est disposée sur une aube directrice (26) d'une turbomachine (20), notamment d'une turbine à vapeur.

12. Turbine comprenant un agencement d'étanchéité selon l'une des revendications 1 à 8.

13. Compresseur comprenant un agencement d'étanchéité selon l'une des revendications 1 à 8.

14. Génératrice comprenant un agencement d'étanchéité selon l'une des revendications 1 à 8.
